# FASCICULE DE BREVET EUROPEEN

(11) **EP 3 184 608 B1**
(45) Date de publication et mention de la délivrance du brevet: **01.08.2018**
(21) Numéro de dépôt: 16306767.1
(22) Date de dépôt: 22.12.2016
(51) Int. Cl.: C10G 45/02, C10G 49/22, C10G 11/18, C10G 69/04, B01D 3/42, C10G 47/00

(54) **INSTALLATION ET PROCEDE REALISANT EN COMMUN LA COMPRESSION DES GAZ ACIDES DE L'UNITE D'HYDROCONVERSION OU D'HYDROTRAITEMENT ET CELLE DES EFFLUENTS GAZEUX DE L'UNITE DE CRAQUAGE CATALYTIQUE**
ANLAGE UND VERFAHREN, DIE GEMEINSAM DIE KOMPRESSION DER SAUREN GASE DER HYDROKONVERTIERUNGS- ODER HYDROTREATMENTEINHEIT UND DIE DER ABGASE AUS DER KATKRACKEINHEIT DURCHFÜHREN
FACILITY AND METHOD JOINTLY PERFORMING THE COMPRESSION OF ACIDIC GASES FROM THE HYDROCONVERSION OR HYDROTREATING UNIT AND OF THE TAIL GAS FROM THE CATALYTIC CRACKING UNIT

(30) Priorité: 23.12.2015 FR 1563172
(43) Date de publication de la demande: 28.06.2017
(73) Titulaire: AXENS, 92508 Rueil-Malmaison Cedex (FR)
(72) Inventeur: LAJEUNESSE, Odile, 92500 RUEIL-MALMAISON (FR); LAMBERT, Nicolas, 92130 ISSY-LES-MOULINEAUX (FR); FRECON, Jacinthe, 92500 Rueil-Malmaison (FR); PIGOURIER, Jérôme, 92190 MEUDON (FR)
(74) Mandataire: Schmitt, Nicolas A.J.

(56) Documents cités:
- US-A1- 2013 043 159
- US-A1- 2015 273 425

## Description

### CONTEXTE DE L'INVENTION

L'invention concerne le domaine des procédés d'hydroconversion de résidus atmosphériques ou sous-vide, ou de gazole ou distillats sous vide ou d'hydrotraitement de gazole ou de distillats sous vide. Les procédés conventionnels d'hydroconversion ou d'hydrotraitement comprennent une section de fractionnement de l'effluent de la section réactionnelle réalisant principalement deux objectifs, l'élimination de l'H2S et des légers et le fractionnement principal des produits de l'unité. L'élimination de l'H2S et des légers engendre la production de gaz acides, qu'il convient alors de purifier avant d'être utilisés comme fuel gas.

### DESCRIPTION SOMMAIRE DES FIGURES

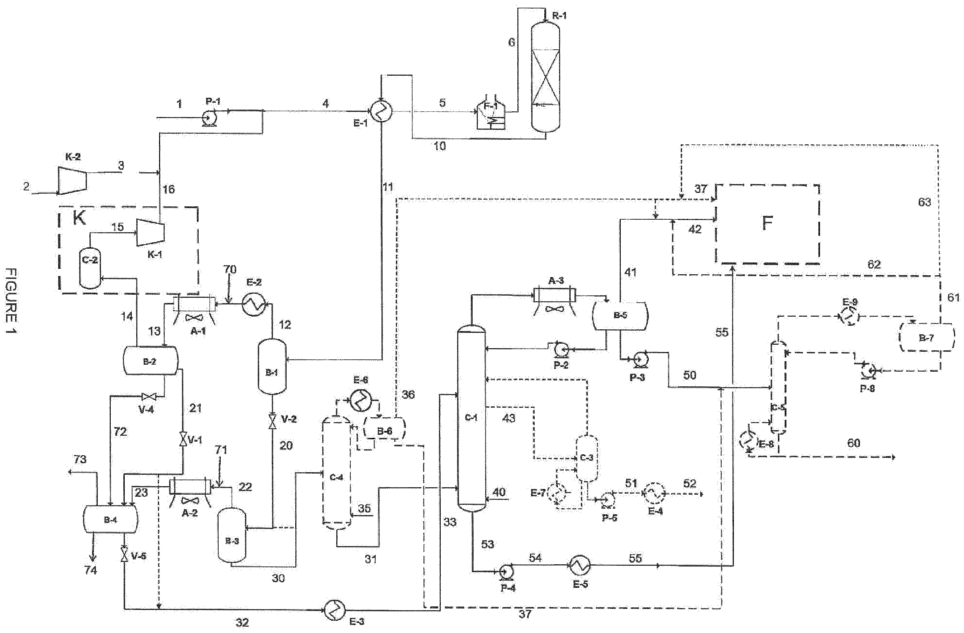

La figure 1 représente un schéma de la section réactionnelle de l'hydrotraitement ou de l'hydroconversion R-1 comportant la section de fractionnement des effluents réactionnels avec la colonne de fractionnement principal C-1 et différents ballons séparateurs notés de B-1 à B-5.

Sur cette figure 1 sont marqués en pointillé trois sections optionnelles :
- une section de séparation traitant un effluent intermédiaire 43 issu de la colonne de fractionnement principal C-1 et comportant une colonne C-3.
- une section de séparation traitant l'effluent de fond du ballon séparateur B-3 et comportant une colonne C-4.
- une section de stabilisation du naphta issu de la colonne de fractionnement C-1 permettant d'éliminer les gaz acides résiduels du naphta et comportant une colonne C-5.

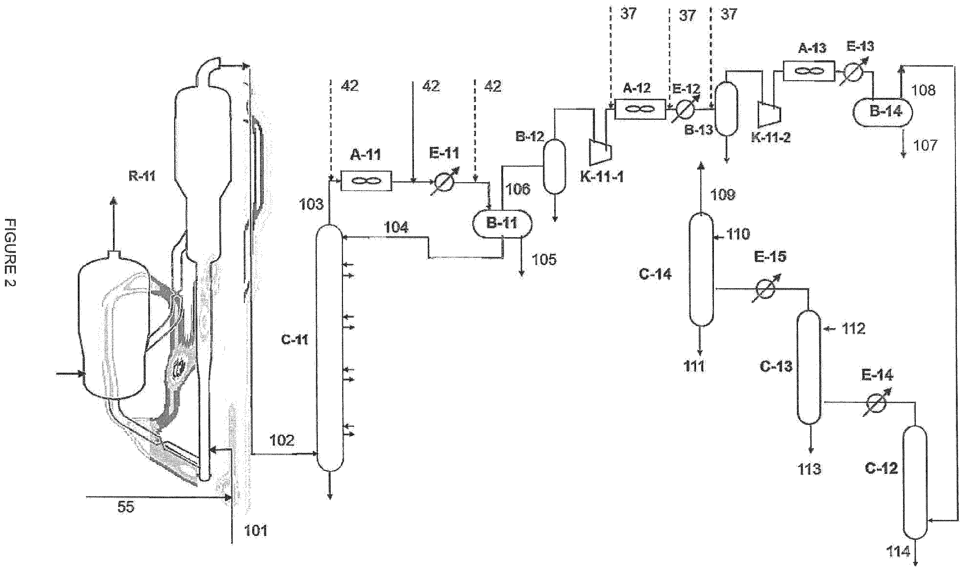

Le rectangle F sur la figure 1 indique l'emplacement de la connexion de cette section avec la section de craquage catalytique présentée dans la figure 2.

La figure 2 représente le schéma de la section réactionnelle du craquage catalytique R-11 avec sa zone de fractionnement des gaz craqués comprenant la colonne C-11, et le compresseur desdits gaz craqués K-11, dédoublés en K-11-1 et K-11-2. La charge de l'unité de craquage catalytique 55 provient essentiellement du flux de fond de la colonne de fractionnement C-1.

### EXAMEN DE L'ART ANTERIEUR

Le brevet US 3,733,260 décrit un procédé d'hydrodésulfuration de gazoles comprenant une section réactionnelle d'hydrodésulfuration, une séparation de l'effluent de cette section en une fraction gazeuse et une première fraction liquide à haute température et haute pression, une condensation partielle de ladite phase vapeur en une fraction comprenant essentiellement de l'hydrogène, et une seconde fraction liquide, un stripage de l'H2S et des hydrocarbures légers de la première et la seconde fractions liquide au moyen de l'hydrogène préalablement traité, une séparation des hydrocarbures stripés en un naphta et un gazole et un recyclage dudit naphta à l'étape de condensation.

La présence de ce striper en amont du fractionnement principal permet l'élimination des gaz acides à une pression suffisamment élevée pour, après traitement aux amines, être envoyé au réseau fuel gaz de la raffinerie. Cependant, cette configuration, nécessite de générer un reflux pour le stripage, et présente l'inconvénient de dissiper une partie de l'énergie contenue dans l'effluent de la section réactionnelle dans l'aérocondenseur de tête du stripper. De plus, la température optimale requise pour l'alimentation du stripage étant inferieure à la température minimum requise pour la séparation en aval, cela nécessite un chauffage de la charge de cette séparation, et donc généralement la présence d'un four sur la charge du fractionnement principal.

Dans le brevet US 3,371,029 est décrit un procédé de séparation d'effluent de réacteur de conversion d'hydrocarbures contenant de l'hydrogène dans lequel (cf Table IV flux 22-27) il n'y a pas de stripage de l'H2S et des hydrocarbures en amont de la séparation principale d'hydrocarbures.

Cette dernière configuration présente l'avantage, par rapport au brevet US 3,733,260, que la température au ballon séparateur chaud est choisie de façon à apporter à la colonne de fractionnement principal, la chaleur requise pour vaporiser la fraction légère issue des réactions de conversion des hydrocarbures dans le réacteur. Cependant, dans ce schéma, les gaz acides ne sont pas éliminés en amont de la séparation principale. Ladite section étant opérée à une pression proche de la pression atmosphérique, les gaz acides doivent être comprimés avant d'être renvoyés vers un réseau de fuel gas d'une raffinerie. US 2013/0043159 divulgue une installation et un procédé d'hydroconversion. Le procédé selon l'invention corrige ces inconvénients en supprimant le compresseur de tête de la colonne de fractionnement principal de la section d'hydroconversion ou d'hydrotraitement, grâce une intégration avec le compresseur de reprise de l'effluent gazeux de l'unité de craquage catalytique.

### DESCRIPTION SOMMAIRE DE L'INVENTION

La présente invention décrit une installation d'hydroconversion ou d'hydrotraitement, par exemple d'hydrodésulfuration, en vue de constituer la charge d'une unité de craquage catalytique, par exemple une coupe de type gazole sous vide (VGO), distillat sous vide (DSV), ou résidu sous vide, ou huile désasphaltée (DAO), ladite installation comprenant au moins:
- une section réactionnelle R1 réalisant l'hydrotraitement ou l'hydroconversion d'une charge destinée à alimenter une unité de craquage catalytique,
- un ou plusieurs ballons séparateurs haute pression B-1 et/ou B-2, dont la charge est constituée par l'effluent issu de la section réactionnelle R1,
- Une zone de compression K réalisant la compression de l'effluent gazeux issu de B-1 et/ou B-2, appelé également hydrogène recyclé, cet effluent gazeux comprimé étant réintroduit dans la zone réactionnelle R-1,
- Une colonne de fractionnement C-1, alimentée par le fond des ballons séparateurs haute pression B1 et B2, ladite colonne C-1 séparant au moins une coupe de tête, une coupe naphta, et une coupe lourde dont au moins une partie alimente la section de craquage catalytique R-11,
- Un four F-1 chauffant la charge de la section réactionnelle R-1, ou uniquement l'hydrogène nécessaire à ladite section réactionnelle, ou encore à la fois l'hydrogène et la charge,
- Une section réactionnelle R-11 de craquage catalytique alimentée par au moins une partie de la fraction lourde issue de la colonne de fractionnement C-1,
- Un deuxième colonne de fractionnement C-11 des effluents de la section réactionnelle du craquage catalytique R-11,
- Un compresseur de reprise K-11, comprimant au moins une partie de l'effluent gazeux de l'unité de craquage catalytique et des gaz acides de la colonne de fractionnement principal C-1, ledit compresseur K-11 pouvant comporter plusieurs étages.

De préférence, l'installation selon l'invention comprend en outre des ballons séparateurs moyenne pression B-3 et B-4 alimentés respectivement par les effluents de fond des ballons B-1 et B-2, et la colonne de fractionnement C-1 est alimentée par le fond du ballon B-4 et in fine par le fond du ballon B-3.

De préférence, l'installation selon l'invention comprend au moins un ballon séparateur haute pression B-14 dont la sortie gazeuse peut être envoyée vers une ou plusieurs colonnes d'absorption C-12 à C-14, et dont la sortie liquide peut être envoyée à la colonne de fractionnement C-11 de l'effluent gazeux de l'unité de craquage catalytique R-11.

L'effluent gazeux issu du ou des colonnes d'absorption C-12 - C-14 peut éventuellement être envoyé vers un traitement aux amines et/ou à la soude afin d'éliminer les composés soufrés.

L'installation selon l'invention peut également de préférence comprendre une section de stabilisation du naphta issu de la colonne de fractionnement C-1 permettant d'éliminer les gaz acides résiduels du naphta et comportant une colonne C-5 dont la fraction de tête rejoint le compresseur de gaz craqués de l'unité de craquage catalytique.

L'installation selon l'invention peut également de préférence comprendre en outre une colonne intermédiaire C-3 alimentée par une fraction intermédiaire issue de la colonne de fractionnement principal C-1.

L'installation selon l'invention peut également de préférence comprendre en outre un stripeur C-4 en amont du fractionnement C-1, alimenté par le flux de fond du ballon B-3 ou B1, ce stripeur C-4 permettant d'éliminer une partie gaz, et notamment l'H2S, issu des réactions de la section réactionnelle R-1, qui est envoyée au compresseur de reprise K-11.

L'invention concerne également le procédé de mise en oeuvre de l'installation précédemment décrite. Dans le procédé et l'installation selon l'invention, la section réactionnelle de l'unité d'hydroconversion ou hydrotraitement R-1 peut comprendre un ou plusieurs réacteurs disposés en série ou en parallèle, par exemple deux réacteurs disposés en série.

Chaque réacteur de la section réactionnelle comprend au moins un lit de catalyseur.

Le catalyseur peut être mis en oeuvre en lit fixe ou en lit expansé, ou encore en lit bouillonnant. Dans le cas d'un catalyseur mis en oeuvre en lit fixe, il est possible de disposer plusieurs lits de catalyseurs dans au moins un réacteur.

Tout catalyseur connu de l'homme du métier peut être utilisé dans le procédé selon l'invention, par exemple un catalyseur comprenant au moins un élément choisi parmi les éléments du Groupe VIII de la classification périodique (groupes 8, 9 et 10 de la nouvelle classification périodique), et éventuellement au moins un élément choisi parmi les éléments du Groupe VIB de la classification périodique (groupe 6 de la nouvelle classification périodique).

Les conditions opératoires de l'unité d'hydrotraitement ou d'hydroconversion R-1 sont généralement les suivantes :
- La température est typiquement comprise entre environ 200 et environ 460 °C,
- La pression totale est typiquement comprise entre environ 1 MPa et environ 20 MPa, généralement entre 2 et 20 MPa, de préférence entre 2,5 et 18 MPa, et de façon très préférée entre 3 et 18 MPa,
- La vitesse spatiale horaire globale de charge liquide pour chaque étape catalytique est typiquement comprise entre environ 0,1 et environ 12, et généralement entre environ 0,4 et environ 10, (la vitesse spatiale horaire étant définie comme le rapport du débit volumique de charge sur le volume de catalyseur),
- La pureté de l'hydrogène utilisé dans le procédé selon l'invention est typiquement comprise entre 50 et 100 % volume,
- La quantité d'hydrogène par rapport à la charge liquide est typiquement comprise entre environ 50 et environ 1200 Nm3/m3.

Dans le procédé et l'installation selon l'invention, la section réactionnelle de l'unité de craquage catalytique R-11 peut comprendre un ou plusieurs réacteurs disposés en série ou en parallèle, opérant en régime fluidisé ou bouillonnant, avec circulation ascendante ou descendante du catalyseur. Cette section réactionnelle comprend également un ou plusieurs régénérateurs disposés en série ou en parallèle qui peuvent de préférence être équipés d'éléments visant à apporter ou soustraire de la chaleur au système (refroidisseur de catalyseur dit « cat cooler » selon la terminologie anglo-saxonne, réchauffeur d'air, etc.).

Toute formulation catalytique comprenant ou non des additifs de type ZSM-5 connus de l'homme du métier peut être utilisée dans la section réactionnelle du craquage catalytique.

Les conditions opératoires du craquage catalytique R-11 sont généralement les suivantes :
- La température en sortie de zone réactionnelle est typiquement comprise entre environ 470°C et environ 650 °C, de préférence entre 500°C et 550°C,
- La pression en sortie de la zone réactionnelle est typiquement comprise entre environ 0,05 MPa g et environ 0,25 MPa g, de préférence entre 0,1 et 0,2 MPa g,
- Le temps de séjour de la charge dans la zone réactionnelle est typiquement compris entre environ 0,5 secondes et environ 20 secondes, de préférence entre 1 et 4 secondes,
- La quantité de catalyseur circulant ramenée à la quantité de charge fraîche injectée est typiquement comprise entre environ 3 et environ 25 m3/m3, de préférence entre 4 et 10 m3/m3.

Selon une variante du procédé selon l'invention, une fraction intermédiaire est extraite de la colonne de fractionnement C-1, ladite fraction intermédiaire étant envoyée dans une colonne intermédiaire C-3, et la fraction de fond de la colonne C-3 étant refroidie au moyen d'un échangeur E-4.

Selon une variante du procédé selon l'invention, la pression de la colonne de séparation C-4 est choisie suffisamment élevée pour que les gaz acides issus de cette séparation soient dirigés vers un étage intermédiaire du compresseur des gaz craqués K-11 de la section de craquage catalytique R-11.

Selon une variante du procédé selon l'invention, la pression de la colonne de séparation C5 est choisie suffisamment élevée pour que les gaz acides issus de cette séparation soient dirigés vers un étage intermédiaire du compresseur des gaz craqués K-11 de la section de craquage catalytique R-11.

L'installation et le procédé selon l'invention se distinguent de l'art antérieur en ce qu'ils réalisent en commun la compression des gaz acides de l'unité d'hydroconversion ou hydrotraitement R-1, et des effluents gazeux de l'unité de craquage catalytique R-11 en utilisant le compresseur des gaz craqués (appelé aussi compresseur de reprise) K-11. L'avantage en terme d'investissement qui en résulte est d'autant plus intéressant que le débit de charge additionnel du compresseur des gaz craqués de l'unité de craquage catalytique K-11 est faible au regard du débit total de ce compresseur. Par conséquent, le coût marginal pour ce compresseur des gaz craqués est faible au regard des gains engendrés par la suppression du compresseur de tête du fractionnement principal de l'unité d'hydroconversion ou hydrotraitement.

Un autre avantage de l'invention est de permettre de récupérer les LPG et le naphta présents dans les gaz acides de l'unité d'hydroconversion ou hydrotraitement dans la section dédiée au sein de l'unité de craquage catalytique.

### DESCRIPTION DETAILLEE DE L'INVENTION

Les figures 1 et 2 décrivent un des modes de réalisation possible de l'installation et du procédé selon l'invention.
La figure 1 représente la section d'hydrotraitement ou d'hydroconversion R-1 avec la colonne de fractionnement C-1 dont la fraction de fond 53 devenant 55, est envoyée vers l'unité de craquage catalytique R-11 représentée par le rectangle F.
La figure 2 représente la section de craquage catalytique R-11 avec sa colonne de fractionnement des gaz craqués C-11, et le ou les compresseurs de gaz craqués K-11, notés K-11-1 et K-11-2.

Dans la suite de la description, et sans que cela constitue une quelconque limitation, l'hydrotraitement R-1 est une hydrodésulfuration.

La charge, par exemple un résidu sous vide, est alimentée via la ligne 1 (figure 1) via la pompe P-1 . L'hydrogène, de préférence en excès par rapport à la charge, est alimenté via la ligne 2 et le compresseur K-2 puis la ligne 3, et mélangé avec la charge 1 avant d'être admis dans un échangeur charge-effluent (E-1) via la ligne 4. L'échangeur E-1 permet de préchauffer la charge au moyen de l'effluent du réacteur d'hydrodésulfuration R-1. Après cet échange, la charge est amenée via la ligne 5 dans un four F-1 permettant d'atteindre le niveau de température nécessaire à la réaction d'hydrodésulfuration, puis la charge chaude est envoyée, via la ligne 6, dans la section d'hydrodésulfuration, constituée par au moins un réacteur d'hydrodésulfuration R-1 comprenant au moins un catalyseur d'hydrodésulfuration.

L'effluent du réacteur R-1 est envoyé ensuite vers l'échangeur E-1 par la ligne 10, puis via la ligne 11 vers le ballon séparateur chaud à haute pression B-1. Une fraction gazeuse est séparée dans ce ballon et récupérée via la ligne 12. La fraction liquide au moins partiellement désulfurée est récupérée en fond via la ligne 20 et rejoint le ballon B-3 via la vanne V-2. Ladite fraction gazeuse 12 comprend de l'hydrogène n'ayant pas réagi, de l'hydrogène sulfuré (H2S) formé lors de la réaction, ainsi que généralement des hydrocarbures légers issus de la conversion des hydrocarbures de la charge dans la section réactionnelle d'hydrodésulfuration R-1.

Après refroidissement dans un échangeur E-2 et un aérocondenseur A-1, la fraction gazeuse 12 est amenée, via la ligne 13, dans un ballon séparateur froid à haute pression B-2 permettant à la fois de réaliser une séparation gaz-liquide et une décantation de la phase liquide aqueuse.

La phase hydrocarbonée liquide issue du ballon séparateur B-2 est, après détente dans la vanne ou la turbine liquide V-1, dirigée dans un ballon séparateur froid à moyenne pression B-4, via la ligne 21.

L'eau également séparée dans le ballon B-2 est de préférence envoyé via la ligne 72 vers le Ballon B-4.

La fraction gazeuse issue du ballon séparateur froid à haute pression B-2 est envoyée via la ligne 14 vers un absorbeur aux amines ou une colonne de lavage C-2 permettant d'éliminer au moins une partie de l'H2S, puis la fraction gazeuse contenant de l'hydrogène est recyclée via les lignes 15 et 16 vers le réacteur d'hydrodésulfuration R-1, après compression au moyen du compresseur K-1 et mélange avec la charge 1.

L'effluent liquide issu du ballon B-1 est, après détente dans la vanne ou la turbine liquide V-2, dirigé dans un ballon séparateur chaud à moyenne pression B-3 via la ligne 20.

Une fraction gazeuse est séparée dans le ballon B-3 et récupérée via la ligne 22. La fraction gazeuse comprend de l'hydrogène n'ayant pas réagi, l'hydrogène sulfuré (H2S) formé lors de la réaction, ainsi que généralement des hydrocarbures légers issus de la conversion des hydrocarbures de la charge dans la section réactionnelle d'hydrodésulfuration R-1.

Après refroidissement dans un aérocondenseur A-2, cette fraction est dirigée, via la ligne 23, dans le ballon séparateur froid à moyenne pression B-4. La fraction liquide au moins partiellement désulfurée est récupérée en fond, détendue à travers la vanne V-5 et dirigée via la ligne 32 vers la colonne de fractionnement C-1, après passage dans l'échangeur E-3.

L'eau est évacuée en fond de ballon B-4 par la ligne 74, et les gaz sont évacués par la ligne 73.

L'effluent liquide issu du ballon B-4 alimente la colonne de fractionnement C-1 via les lignes 32 et 33, après détente à travers la vanne V-5 et chauffage dans l'échangeur E-3.

La colonne de fractionnement C-1 est opérée à faible pression (environ 0,2 MPa). La chaleur nécessaire à la séparation est préférentiellement apportée par la température du ballon séparateur chaud B-3. La colonne de fractionnement principal C-1 est également alimentée par de la vapeur de stripage via la ligne 40.

La fraction de tête de la colonne de fractionnement C-1 est envoyée après refroidissement dans un aeroréfrigérant A-3, dans le ballon B-5.

En tête de ce ballon B-5 sort une fraction de tête récupérée via la ligne 41 contenant les gaz acides résiduels qui sont envoyés via la ligne 42, soit en amont de l'aérocondenseur A-11, soit en amont de l'échangeur E-11, soit encore en aval de cet échangeur (ligne(s) 42 représentée(s) en détail sur la figure 2).

Le produit obtenu en fond du ballon séparateur B-5 est évacué par la ligne 50 munie d'une pompe P-3. Ce flux 50 est constitué de coupes naphta présentant un point d'ébullition final inférieur à 200°C. Une autre partie du liquide de fond du ballon B-5 est renvoyée via la pompe P-2 en tête de la colonne de séparation C-1.

Selon une variante préférée de l'invention, une colonne de stabilisation C-5 du naphta issu de la colonne de fractionnement C-1 via la ligne 50, permet d'éliminer les gaz acides résiduels du naphta produit et exporté via la ligne 60 après refroidissement dans l'échangeur E-8. Les gaz acides ainsi récupérés en tête de séparation de la colonne C-5 sont également dirigés vers le compresseur de l'unité de craquage catalytique via la ligne 61, 62 puis 42, ou 63 puis 37, après refroidissement dans l'échangeur E-9 et passage dans le ballon B-7. En fond de ballon B-7 on récupère une fraction liquide qui est recyclée à la colonne C-5 via la pompe P-8.

La pression de la colonne de séparation C-5 peut être choisie suffisamment élevée pour que les gaz acides issus de de cette séparation, puissent être dirigés vers un étage intermédiaire du compresseur K-11 via la ligne 37.

La fraction intermédiaire issue de la colonne de fractionnement principal C-1 via la ligne 43 est envoyée dans la colonne intermédiaire C-3. La fraction de fond de la colonne C-3, via la ligne 51 et la pompe P-5, est refroidie au moyen d'un échangeur E-4, puis récupérée via la ligne 52. La colonne C-3 est équipée d'un rebouilleur E-7.

De préférence, le flux 52 est une coupe gazole présentant une température de distillation à 95% volume (selon la norme NF EN ISO 3405) inférieure à 360°C.

La fraction lourde issue de la colonne de fractionnement principal C-1 via la ligne 53 est refroidie au moyen de l'échangeur E-5 après passage dans la pompe P-4. La fraction ainsi obtenue via la ligne 55 est un gazole sous vide hydrotraité, dans le cas présent désulfuré, qui constitue la charge principale de la section de craquage catalytique (Cf figure 2). Cette charge principale peut être complétée par divers autres charges introduites par la ligne 101.

Selon un autre mode de fonctionnement, il est possible de récupérer via la ligne 50 une fraction allant du naphta au gazole léger, et via la ligne 55, une fraction gazole lourd. Dans ce cas, la colonne de fractionnement C-1 ne comprend pas de colonne intermédiaire C-3 et les lignes 51 et 52 sont absentes.

La charge de l'unité de craquage catalytique R-11 est constituée au moins en partie par la fraction lourde 55 issue du fractionnement principal C-1 de l'unité d'hydrodésulfuration R-1, à laquelle d'autres charges extérieures peuvent être ajoutées via la ligne 101.

La charge cumulée de l'unité de craquage catalytique (flux 55 et 101) est injectée dans la section réactionnelle R-11 (figure 2), dans laquelle elle est mise en contact avec le catalyseur chaud issu de la zone de régénération afin de procéder aux réactions de craquage catalytique.

L'effluent chaud du réacteur R-11 sortant sous forme gazeuse en tête de la zone réactionnelle de R-11, est envoyé ensuite, via la ligne 102, vers le fond de la colonne de fractionnement principal C-11 à haute température (typiquement plus de 500°C).

Grâce à différents reflux circulants (non décrits ici), différentes coupes sont extraites de la colonne de fractionnement C-11.

La fraction légère gazeuse à plus faible température (typiquement entre environ 100°C et 130°C) et basse pression (typiquement autour de 1 bar (0,1 MPa) effectif) sort de C-11 via la ligne 103. Elle est alors refroidie dans un aérocondenseur A-11, puis un refroidisseur à eau E-11, avant d'entrer dans le ballon de reflux B-11 de la colonne de fractionnement principal C-11, ballon de reflux B-11 qui permet à la fois de réaliser une séparation gaz-liquide et une décantation de la phase liquide aqueuse éliminée par la ligne 105.

En amont de ce ballon de reflux B-11 est injectée la fraction gazeuse de tête de la colonne de fractionnement principal C-1 de l'unité d'hydrodésulfurisation, récupérée via la ligne 41, puis 42. Les différents points d'introduction de ladite fraction gazeuse 42 sont tous situés en amont du ballon de reflux B-11.

Dans une variante de l'invention, un stripeur C-4 peut être implémenté en amont de la colonne de fractionnement C-1.

Ce stripeur C-4, vise à éliminer une partie gaz, et notamment l'H2S, issus des réactions de la section réactionnelle R-1.

Cette colonne C-4 est alimentée par le flux de fond du ballon B-3 via la ligne 30.

La colonne C-4 est de préférence stripée au moyen de tout gaz de stripage introduit via la ligne 35 tel que par exemple un gaz contenant de l'hydrogène ou de la vapeur d'eau. De préférence on utilise de la vapeur d'eau pour réaliser ledit stripage.

Les gaz acides issus de la tête de la colonne de stripage C-4 sont dirigés dans la section de craquage catalytique R-11 via les lignes 36 puis 37, après refroidissement dans le condenseur E-6 et passage dans le ballon de reflux B-6.

La pression de la colonne de séparation C-4 peut en effet être choisie suffisamment élevée pour que les gaz acides issus de de cette séparation, puissent être dirigés vers un étage intermédiaire du compresseur K-11 via la ligne 37. Le point d'injection le plus approprié sera fonction des températures et pressions afin de minimiser la consommation énergétique.

Une partie de la phase hydrocarbonée liquide issue du ballon séparateur B-11 est renvoyée comme reflux à la colonne C-11 via la ligne 104, tandis que le reste est dirigé vers le fractionnement secondaire via la ligne 105 afin de séparer plus finement les gaz légers des GPL, de l'essence et des fractions plus lourdes (ce fractionnement secondaire n'est ni représenté sur la figure 2, ni décrit).

La phase hydrocarbonée vapeur issue du ballon séparateur B-11 est dirigée via la ligne 106 vers un ballon séparateur B-12, puis vers la succion du premier étage K-11-1 du compresseur de gaz craqués K-11. La décharge de K-11-1 est refroidie successivement dans un aérocondenseur A-12 puis un refroidisseur à eau E-12 avant d'entrer dans le ballon séparateur B-13.

Les fractions liquides récupérées en fond des ballons B-12 et B-13 sont recyclées vers le fractionnement principal C-11 ou secondaire (non décrit ici).

La fraction vapeur issue du ballon séparateur B-13 est dirigée vers la succion du second étage K-11-2 du compresseur de gaz craqués K-11. La décharge de K-11-2 est refroidie successivement dans un aérocondenseur A-13 puis un refroidisseur à eau E-13 avant d'entrer, selon une variante préférée dans un ballon séparateur à haute pression B-14, qui permet à la fois de réaliser une séparation gaz-liquide et une décantation de la phase liquide aqueuse par la ligne 107.

Toujours selon cette variante préférée, la phase hydrocarbonée liquide issue du ballon séparateur B-14 est dirigée vers le fractionnement secondaire via la ligne 107 afin de séparer plus finement les hydrocarbures récupérés sous forme liquide, tandis que la phase liquide aqueuse est envoyée au traitement approprié (non décrit ici).

La phase hydrocarbonée vapeur issue du ballon séparateur B-14 est dirigée via la ligne 108 dans une ou plusieurs colonnes d'absorption C-12, C-13, C-14 afin d'éliminer graduellement les dernières espèces plus lourdes que le fuel gaz, en le contactant avec des coupes hydrocarbonées de plus en plus légères issues du fractionnement secondaire (non décrit ici).

Les effluents gazeux hydrocarbonés issus des colonnes d'absorption C-12 et C-13 sont refroidis à l'eau dans les échangeurs E-14 et E-15 respectivement. Les composés soufrés, en particulier l'H2S, sont éliminés dans une colonne d'absorption à l'amine C-14 avant d'être envoyés au réseau fuel gaz de la raffinerie via la ligne 109. La solution d'amines sont respectivement introduites par les lignes 110 et 112. Des étapes supplémentaires de purification de ce flux vapeur peut éventuellement être mises en oeuvre si nécessaire. Les flux de fond des colonnes C-12, C-13 et C-14, respectivement 114, 113 et 111, sont les produits valorisables du procédé, après un post traitement éventuel.

### EXEMPLE

Le tableau 1 ci-dessous montre les résultats obtenus selon le schéma de l'art antérieur, c'est-à-dire avec un compresseur des gaz de tête de la colonne de fractionnement principal C-1, et selon l'invention, c'est-à-dire avec seulement le compresseur des gaz craqués K-11 de l'unité de craquage catalytique R-11, traitant également les gaz de tête de la colonne de fractionnement C-1.

L'exemple selon l'invention correspond au schéma des figure 1 et 2 sans les colonnes optionnelles C3, C4, C5, ni les sections correspondantes représentées en pointillés sur la figure 1.

Selon le schéma de l'invention, le compresseur de tête de la colonne de fractionnement principal C-1 de la section d'hydroconversion ou d'hydrotraitement R-1 est supprimé grâce une intégration avec le compresseur de reprise de l'effluent gazeux K-11 de l'unité de craquage catalytique.

L'augmentation du débit total à l'entrée du compresseur K-11 de la section de craquage catalytique, du au flux additionnel 42 est très faible (de l'ordre de 1%).

Par ailleurs, la quantité de naphta récupérée, en aval de la section réactionnelle du craquage catalytique R-11, et après hydrodésulfuration et fractionnement, est augmentée de 0,5%, et la quantité additionnelle de GPL récupéré est d'environ 1%.

L'appareillage et le procédé selon l'invention permettent donc d'économiser le compresseur de tête du fractionnement principal C-1, sans augmenter significativement la capacité du compresseur K-11 de la section de craquage catalytique, et donc d'économiser en termes d'investissement et de coûts opératoires avec des performances sensiblement identiques, voire même légèrement améliorées.

**TABLEAU 1**

| Composition de la charge du compresseur K-11 du craquage catalytique | %poids | | t/h | |
|---|---|---|---|---|
| | Art antérieur | Selon l'invention | Art antérieur | Selon l'invention |
| H₂S | 0,033 | 0,17 | 0,15 | 0,81 |
| Gaz sec (H₂-C₁-C₂) | 8,53 | 8,62 | 39,33 | 40,08 |
| GPL (C₃-C₄) | 38,25 | 38,29 | 176,34 | 177,94 |
| Essence (C₅-220°C) | 31,24 | 31,16 | 144,05 | 144,82 |

## Revendications

1. Installation d'hydroconversion ou d'hydrotraitement en vue de constituer la charge d'une unité de craquage catalytique d'une coupe de type gazole sous vide (VGO), distillat sous vide (DSV), ou résidu sous vide, ou huile désasphaltée (DAO), ladite installation comprenant au moins:
• une section réactionnelle R1 réalisant l'hydrotraitement ou l'hydroconversion d'une charge destinée à alimenter une unité de craquage catalytique,
• un ou plusieurs ballons séparateurs haute pression B-1 et/ou B-2, dont la charge est constituée par l'effluent issu de la section réactionnelle R1,
• Une zone de compression K réalisant la compression de l'effluent gazeux issu de B-1 et/ou B-2, appelé également hydrogène recyclé, cet effluent gazeux comprimé étant réintroduit dans la zone réactionnelle R-1,
• Une colonne de fractionnement C-1, alimentée par le fond des ballons séparateurs haute pression B-1 et B-2, ladite colonne C-1 séparant au moins une coupe de tête, une coupe naphta, et une coupe lourde dont au moins une partie alimente la section de craquage catalytique R-11,
• Un four F-1 chauffant la charge de la section réactionnelle R1, ou uniquement l'hydrogène nécessaire à ladite section réactionnelle, ou encore à la fois l'hydrogène et la charge,
• Une section réactionnelle R-11 de craquage catalytique alimentée par au moins une partie de la fraction lourde issue de la colonne de fractionnement C-1,
• Un deuxième colonne de fractionnement C-11 des effluents de la section réactionnelle du craquage catalytique R-11,
• Un compresseur de reprise K-11, comprimant au moins une partie de l'effluent gazeux de l'unité de craquage catalytique et des gaz acides issus de la colonne de fractionnement principal C-1, ledit compresseur K-11 pouvant comporter plusieurs étages.

2. Installation selon la revendication 1 comprenant en outre des ballons séparateurs moyenne pression B-3 et B-4 alimentés respectivement par les effluents de fond des ballons B-1 et B-2, et dans laquelle la colonne de fractionnement C-1 est alimentée par le fond des ballons B-3 et B-4.

3. Installation selon l'une des revendications 1 ou 2 comprenant en outre au moins un ballon séparateur haute pression B-14, dont la sortie gazeuse peut être envoyée vers une ou plusieurs colonnes d'absorption, et dont la sortie liquide peut être envoyée à la colonne de fractionnement C-11 de l'effluent gazeux de l'unité de craquage catalytique R-11.

4. Installation selon l'une des revendications 1 à 3 comprenant en outre une section de stabilisation du naphta issu de la colonne de fractionnement C-1 permettant d'éliminer les gaz acides résiduels du naphta, et comportant une colonne de séparation C-5 dont la fraction de tête rejoint le compresseur de gaz craqués de l'unité de craquage catalytique.

5. Installation selon l'une des revendications 1 à 4 comprenant en outre une colonne intermédiaire C-3 alimentée par une fraction intermédiaire issue de la colonne de fractionnement principal C-1.

6. Installation selon l'une des revendications 1 à 5 comprenant en outre un stripeur C-4 en amont du fractionnement C-1, alimenté par le flux de fond du ballon B-3 ou B1, ce stripeur C-4 permettant d'éliminer une partie gaz, et notamment l'H2S, issu des réactions de la section réactionnelle R-1, qui est envoyée au compresseur de reprise K-11.

7. Procédé d'hydrotraitement ou d'hydroconversion mettant en oeuvre l'installation selon l'une des revendications 1 à 6.

8. Procédé selon la revendication 7, dans lequel les conditions opératoires de la section réactionnelle d'hydrotraitement ou d'hydroconversion R-1 sont les suivantes :
• La température est comprise entre 200 et 460°C,
• La pression totale est comprise entre 1 MPa et 20 MPa, généralement entre 2 et 20 MPa, de préférence entre 2,5 et 18 MPa, et de façon très préférée entre 3 et 18 MPa,
• La vitesse spatiale horaire globale de charge liquide pour chaque étape catalytique est comprise entre 0.1 et 12, et généralement entre 0.4 et 10
• La pureté de l'hydrogène utilisé dans le procédé selon l'invention est comprise entre 50 et 100 % volume,
• La quantité d'hydrogène par rapport à la charge liquide est comprise entre 50 et 1200 Nm3/m3.

9. Procédé selon l'une des revendications 7 ou 8, dans lequel les conditions opératoires de la section de craquage catalytique R-11 sont les suivantes :
• La température en sortie de zone réactionnelle est comprise entre 470 et 650 °C, de préférence entre 500 et 550°C,
• La pression en sortie de la zone réactionnelle est comprise entre 0,05 MPa g et 0,25 MPa g, de préférence entre 0,1 et 0,2 MPa g,
• Le temps de séjour de la charge dans la zone réactionnelle est compris entre 0,5 secondes et 20 secondes, de préférence entre 1 et 4 secondes,
• La quantité de catalyseur circulant ramenée à la quantité de charge fraîche injectée est comprise entre 3 et 25 m3/m3, de préférence entre 4 et 10 m3/m3.

10. Procédé selon l'une des revendications 7 à 9, dans lequel une fraction intermédiaire est extraite de la colonne de fractionnement C-1, ladite fraction intermédiaire étant envoyée dans une colonne intermédiaire C-3, et la fraction de fond de la colonne C-3 étant refroidie au moyen d'un échangeur E-4.

11. Procédé selon l'une des revendications 7 à 10, dans lequel la pression de la colonne de séparation C-4 est choisie suffisamment élevée pour que les gaz acides issus de cette séparation soient dirigés vers un étage intermédiaire du compresseur des gaz craqués K-11 de la section de craquage catalytique R-11.

12. Procédé selon l'une des revendications 7 à 11, dans lequel la pression de la colonne de séparation C5 est choisie suffisamment élevée pour que les gaz acides issus de cette séparation soient dirigés vers un étage intermédiaire du compresseur des gaz craqués K-11 de la section de craquage catalytique R-11.

## Patentansprüche

1. Anlage zur Hydroumwandlung oder zur Hydrobehandlung, um die Charge einer katalytischen Krack-Einheit für eine Fraktion vom Typ eines Vakuumgasöls (VGO), Vakuumdestillats (DSV) oder Vakuumrückstands oder deasphaltierten Öls (DAO) zu bilden, wobei die Anlage mindestens umfasst:
- eine Reaktionssektion R1, welche die Hydrobehandlung oder Hydroumwandlung einer Charge durchführt, die dazu bestimmt ist, eine katalytische Krack-Einheit zu speisen,
- einen oder mehrere Hochdruck-Separatorbehälter B-1 und/oder B-2, deren Charge aus dem Abfluss von der Reaktionssektion R1 gebildet wird,
- eine Kompressionszone K, welche die Kompression des gasförmigen Abflusses von B-1 und/oder B-2 durchführt, der auch als recyclierter Wasserstoff bezeichnet wird, wobei dieser komprimierte gasförmige Abfluss in die Reaktionszone R1 erneut eingebracht wird,
- eine Fraktionierungssäule C-1, die durch den Boden der Hochdruck-Separatorbehälter B-1 und B-2 gespeist wird, wobei die Säule C-1 mindestens eine Kopffraktion, eine Naphta-Fraktion und eine schwere Fraktion trennt, von der mindestens ein Teil die katalytische Krack-Sektion R-11 speist,
- einen Ofen F-1, der die Charge der Reaktionssektion R1, oder nur Wasserstoff, der für die Reaktionssektion notwendig ist, oder auch gleichzeitig Wasserstoff und die Charge erhitzt,
- eine Reaktionssektion R-11 zum katalytischen Kracken, welche von mindestens einem Teil der schweren Fraktion von der Fraktionierungssäule C-1 gespeist wird,
- eine zweite Fraktionierungssäule C-11 von Abflüssen der Reaktionssektion R-11 zum katalytischen Kracken,
- einen Wiederaufnahmekompressor K-11, der mindestens einen Teil des gasförmigen Abflusses der katalytischen Krackeinheit und der sauren Gase von der Hauptfraktionierungssäule C-1 komprimiert, wobei der Kompressor K-11 mehrere Stufen umfassen kann.

2. Anlage nach Anspruch 1, ferner umfassend Mitteldruck-Separatorbehälter B-3 und B-4, die jeweils von den Abflüssen vom Boden der Behälter B-1 und B2 gespeist werden, und wobei die Fraktionierungssäule C-1 vom Boden der Behälter B-3 und B-4 gespeist wird.

3. Anlage nach einem der Ansprüche 1 oder 2, ferner umfassend mindestens einen Hochdruck-Separatorbehälter B-14, dessen gasförmiger Ausgang zu einer oder mehreren Absorptionssäulen befördert werden kann, und dessen flüssiger Ausgang zur Fraktionierungssäule C-11 des gasförmigen Abflusses der katalytischen Krack-Einheit R-11 befördert werden kann.

4. Anlage nach einem der Ansprüche 1 bis 3, ferner umfassend eine Sektion zur Stabilisierung von Naphta von der Fraktionierungssäule C-1, die es gestattet, die sauren Restgase von Naphta zu eliminieren, und umfassend eine Trennsäule C-5, deren Kopffraktion mit dem Kompressor für die gekrackten Gase der katalytischen Krack-Einheit verbunden ist.

5. Anlage nach einem der Ansprüche 1 bis 4, ferner umfassend eine Zwischensäule C-3, die von einer Zwischenfraktion von der Hauptfraktionierungssäule C-1 gespeist wird.

6. Anlage nach einem der Ansprüche 1 bis 5, ferner umfassend einen Abzieher C-4 stromaufwärts von der Fraktionierung C-1, der von dem Strom vom Boden des Behälters B-3 oder B-1 gespeist wird, wobei dieser Abzieher C-4 es gestattet, einen gasförmigen Teil, und insbesondere H2S, von den Reaktionen der Reaktionssektion R-1 zu eliminieren, der zu dem Wiederaufnahmekompressor K-11 befördert wird.

7. Verfahren zur Hydrobehandlung oder zur Hydroumwandlung, welches die Anlage nach einem der Ansprüche 1 bis 6 verwendet.

8. Verfahren nach Anspruch 7, wobei die Betriebsbedingungen der Reaktionssektion zur Hydrobehandlung oder zur Hydroumwandlung R-1 die folgenden sind:
- die Temperatur liegt zwischen 200 und 460°C,
- der Gesamtdruck liegt zwischen 1 MPa und 20 MPa, allgemein zwischen 2 und 20 MPa, vorzugsweise zwischen 2,5 und 18 MPa, und stark bevorzugt zwischen 3 und 18 MPa,
- die globale Raumgeschwindigkeit pro Stunde der Flüssigfraktion für jeden katalytischen Schritt liegt zwischen 0,1 und 12, und allgemein zwischen 0,4 und 10,
- die Reinheit des Wasserstoffs, der in dem Verfahren gemäß der Erfindung verwendet wird, liegt zwischen 50 und 100 Vol.-%,
- die Menge an Wasserstoff im Verhältnis zur Flüssigfraktion liegt zwischen 50 und 1200 Nm3/m3.

9. Verfahren nach einem der Ansprüche 7 oder 8, wobei die Betriebsbedingungen der katalytischen Krack-Sektion R-11 die folgenden sind:
- die Temperatur am Ausgang der Reaktionszone liegt zwischen 470 und 650°C, vorzugsweise zwischen 500 und 550°C,
- der Druck am Ausgang der Reaktionszone liegt zwischen 0,05 MPa g und 0,25 MPa g, vorzugsweise zwischen 0,1 und 0,2 MPa g,
- die Verweilzeit der Charge in der Reaktionszone liegt zwischen ungefähr 0,5 Sekunden und 20 Sekunden, vorzugsweise zwischen 1 und 4 Sekunden,
- die Menge des zirkulierenden Katalysators, die zu der Menge der frischen injizierten Charge zurückgeführt wird, liegt zwischen 3 und 25 m3/m3, vorzugsweise zwischen 4 und 10 mg3/m3.

10. Verfahren nach einem der Ansprüche 7 bis 9, wobei eine Zwischenfraktion aus der Fraktionierungssäule C-1 extrahiert wird, wobei die Zwischenfraktion in eine Zwischensäule C-3 befördert wird, und die Bodenfraktion der Säule C-3 mit einem Tauscher E-4 abgekühlt wird.

11. Verfahren nach einem der Ansprüche 7 bis 10, wobei der Druck der Trennsäule C-4 ausreichend hoch gewählt wird, damit die sauren Gase von dieser Trennung zu einer Zwischenstufe des Kompressors für gekrackte Gase K-11 der katalytischen Krack-Sektion R-11 gerichtet werden.

12. Verfahren nach einem der Ansprüche 7 bis 11, wobei der Druck der Trennsäule C-5 ausreichend hoch gewählt wird, damit die sauren Gase von dieser Trennung zu einer Zwischenstufe des Kompressors für gekrackte Gase K-11 der katalytischen Krack-Sektion R-11 gerichtet werden.

## Claims

1. A hydroconversion or hydrotreatment installation with a view to constituting the feedstock of a catalytic cracking unit of a cut of type vacuum gas oil (VGO), vacuum distillate (VD) or vacuum residue, or deasphalted oil (DAO), said installation comprising at least:
• a reaction section R1 for implementing hydrotreatment or hydroconversion of a feedstock intended to feed a catalytic cracking unit,
• one or more high-pressure separator vessels B1 and/or B2 whose feedstock is formed by the effluent issuing from the reaction section R1,
• a compression zone K for implementing compression of the gaseous effluent issuing from B-1 and/or B-2, also referred to as recycled hydrogen, said compressed gaseous effluent being reintroduced into the reaction zone R-1,
• a fractionating column C-1 fed by the bottoms of the high-pressure separator vessels B-1 and B-2, said column C-1 separating at least a head cut, a naphtha cut, and a heavy cut of which at least a part feeds the catalytic cracking section R-11,
• a furnace F-1 for heating the feedstock of the reaction section R1 or solely the hydrogen necessary for said reaction zone, or again both hydrogen and the feedstock,
• a catalytic cracking reaction section R-11 fed by at least a part of the heavy fraction issuing from the fractionating column C-1,
• a second fractionating column C-11 for the effluents from the catalytic cracking reaction section R-11, and
• a recovery compressor K-11 for compressing at least a part of the gaseous effluent from the catalytic cracking unit and the acid gases issuing from the main fractionating column C-1, which compressor K-11 may comprise a plurality of stages.

2. An installation according to claim 1 further comprising medium-pressure separator vessels B-3 and B-4 respectively fed by the bottoms effluents of the vessels B-1 and B-2 and in which the fractionating column C-1 is fed by the bottoms of the vessels B-3 and B-4.

3. An installation according to one of claims 1 and 2 and further comprising at least one high-pressure separator vessel B-14 whose gaseous outlet can be passed towards one or more absorption columns and whose liquid outlet can be passed to the fractionating column C-11 for the gaseous effluent from the catalytic cracking unit R-11.

4. An installation according to one of claims 1 to 3 and further comprising a section for stabilisation of the naphtha issuing from the fractionating column C-1 permitting elimination of the residual acid gases from the naphtha and comprising a separation column C-5 of which the head fraction rejoins the compressor for the cracked gases of the catalytic cracking unit.

5. An installation according to one of claims 1 to 4 and further comprising an intermediate column C-3 fed by an intermediate fraction issuing from the main fractionating column C-1.

6. An installation according to one of claims 1 to 5 and further comprising a stripper C-4 upstream of the fractionating column C-1, fed by the bottoms flow from the vessel B-3 or B-1, said stripper C-4 permitting elimination of a gas part and in particular H2S, issuing from the reactions of the reaction section R-1, which is passed to the recovery compressor K-11.

7. A hydrotreatment or hydroconversion process using the installation according to one of claims 1 to 6.

8. A process according to claim 7 wherein the operating conditions of the hydrotreatment or hydroconversion reaction section R-1 are the following:
• the temperature is between 200 and 460°C,
• the total pressure is between 1 MPa and 20 MPa, generally between 2 and 20 MPa, preferably between 2.5 and 18 MPa and very preferably between 3 and 18 MPa,
• the overall hourly space velocity of liquid feedstock for each catalytic step is between 0.1 and 12 and generally between 0.4 and 10,
• the purity of the hydrogen used in the process according to the invention is between 50 and 100% by volume, and
• the amount of hydrogen in relation to the liquid feedstock is between 50 and 1200 Nm3/m3.

9. A process according to one of claims 7 and 8 wherein the operating conditions of the catalytic cracking section R-11 are the following:
• the reaction zone outlet temperature is between 470 and 650°C, preferably between 500 and 550°C,
• the outlet pressure of the reaction zone is between 0.05 MPa g and 2.25 MPa g, preferably between 0.1 and 0.2 MPa g,
• the residence time of the feedstock in the reaction zone is between 0.5 seconds and 20 seconds, preferably between 1 and 4 seconds, and
• the amount of circulating catalyst related to the amount of injected fresh feedstock is between 3 and 25 m3/m3, preferably between 4 and 10 m3/m3.

10. A process according to one of claims 7 to 10 wherein the intermediate fraction is extracted from the fractionating column C-1, said intermediate fraction being passed into an intermediate column C-3 and the bottoms fraction of the column C-3 being cooled by means of an exchanger E-4.

11. A process according to one of claims 7 to 10 wherein the pressure of the separation column C-4 is selected to be sufficiently high for the acid gases issuing from said separation operation to be directed towards an intermediate stage of the compressor K-11 for the cracked gases of the catalytic cracking section R-11.

12. A process according to one of claims 7 to 11 wherein the pressure of the separation column C-5 is selected to be sufficiently high for the acid gases issuing from said separation operation to be directed towards an intermediate stage of the compressor K-11 for the cracked gases of the catalytic cracking section R-11.
